# EUROPEAN PATENT APPLICATION

(11) **EP 4 206 875 A1**
(43) Date of publication of application: **05.07.2023**
(21) Application number: 21218324.8
(22) Date of filing: 30.12.2021
(51) Int. Cl.: G06F 3/041, B60K 35/00, B60W 50/10

(54) **A VEHICLE AND A METHOD FOR CORRECTING A TOUCH INPUT MISS ON A TOUCH SCREEN OF A VEHICLE**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: JOHANSSON, Jonathan, 417 14 GÖTEBORG (SE); SETTERBERG, Johan, 416 79 GÖTEBORG (SE)
(74) Representative: Zacco Sweden AB

(57) **Abstract**

The disclosure relates to a vehicle (1) comprising: a touch screen (2), a finger tracking sensor device (3) for tracking a finger close to the touch screen, and a bump detection system (4) for detecting acceleration of the vehicle; a processing circuitry (5) operatively connected to the finger tracking sensor device, the touch screen and the bump detection system (4), configured to: detect and track a hand or finger using the finger tracking sensor device; predict a press location on the touch screen based on the finger tracking sensor device; detect a touch input on the touch screen; detect, at the bump detection system (4), an acceleration above a predetermined threshold; and in response to detecting the touch input and the acceleration within a predetermined time window, compare the touch input location with the predicted press location and apply the predicted press location instead of the location of the touch input as effective touch input to the touch screen. The disclosure further relates to a method for correcting a touch input miss on a touch screen of a vehicle.

## Description

### Technical field

The present disclosure relates to a vehicle and a method for correcting a touch input miss on a touch screen of a vehicle. More specifically, the disclosure relates to a vehicle and a method for correcting a touch input miss on a touch screen of a vehicle as defined in the introductory parts of the independent claims.

### Background art

Most modern vehicles are to some extent operated using a touch display. Icons on the touch display has to be pressed to control systems of the vehicle. However, as the vehicle moves in a sometimes surprising ways when driving on uneven roads or if the driver is not doing something a passenger is not aware of when operating the touch display, the press can miss the intended touch position on the display. This will frustrate the user trying to use the touch display and may also impose a safety hazard is the driver needs to concentrate on the touch display instead of the road. There is thus a need for improved ways of operating touch displays in vehicles.

### Summary

It is an object of the present disclosure to mitigate, alleviate or eliminate one or more of the above-identified deficiencies and disadvantages in the prior art and solve at least the above mentioned problem. According to a first aspect there is provided a vehicle comprising: a touch screen, a finger tracking sensor device for tracking a finger close to the touch screen, and a bump detection system for detecting acceleration of the vehicle; a processing circuitry operatively connected to the finger tracking sensor device, the touch screen and the bump detection system, configured to: detect and track a hand or finger using the finger tracking sensor device; predict a press location on the touch screen based on the finger tracking sensor device; detect a touch input on the touch screen; detect, at the bump detection system, an acceleration above a predetermined threshold; and in response to detecting the touch input and the acceleration within a predetermined time window, compare the touch input location with the predicted press location and apply the predicted press location instead of the location of the touch input as effective touch input to the touch screen.

An advantage with this disclosure is that the vehicle understands when a user wanted to press a button or affordance on the touch screen but missed it, corrects the input and activates the button or affordance anyway so that the user does not have to repeat the press input process. This leads to fewer inputs needed by the user so that e.g. a driver can concentrate on driving the vehicle. Thus the safety of the vehicle is increased.

According to some embodiments, the processing circuitry is configured to apply the predicted press location instead of the location of the touch input as effective touch input to the touch screen only if the touch input is determined to be a near miss of a button or affordance on the touch screen. This embodiment increases the accuracy of the correction of the press location and only applies it when it is determined to be needed at a near miss.

According to some embodiments, the processing circuitry is configured to apply the predicted press location instead of the location of the touch input as effective touch input to the touch screen only if the touch input is received after the detected acceleration. This embodiment further increases the accuracy of the correction of the press location and only applies it when it is determined to be needed due to sudden movements of the vehicle.

According to some embodiments, the predetermined threshold is different depending on the direction of the acceleration, i.e. if the acceleration is vertical, horizontal in the moving direction of the vehicle or horizontal in the lateral direction of the vehicle. In that way normal forward or reverse acceleration of the vehicle may be set to not trigger the correction of the press location for normal driving acceleration in a forward or rear direction while it may me more sensitive to sudden lateral movement and even more sensitive to vertical acceleration.

According to some embodiments, the bump detection system is a suspension sensor arranged to detect accelerating movement in the vehicle suspension. An advantage with this embodiment is that bumps in the road are easily detected.

According to some embodiments, the bump detection system is a movement sensor. An advantage with this embodiment is that bumps in the road are easily detected due to acceleration it causes in any direction.

According to some embodiments, the bump detection system is a sensor scanning the road in front of the vehicle to predict bumps in the road. An advantage with this embodiment is that bumps in the road can be predicted, further increasing the accuracy of the correction of the press location.

According to some embodiments, the predetermined time window is 0 - 1 s. This embodiment further increases the accuracy of the correction of the press location and only applies it when it is determined to be needed.

According to some embodiments, the near miss is a miss of less than 20 mm from an affordance on an area of the display not dedicated to an affordance or button. This embodiment further increases the accuracy of the correction of the press location and only applies it when it is determined to be needed.

According to some embodiments, the finger tracking sensor device is a camera. This embodiment is advantageous as many vehicles already have cameras, avoiding the need for extra sensors, thereby saving cost, environment, space and energy consumption of the vehicle.

According to some embodiments, the finger tracking sensor device is a LIDAR sensor. This embodiment is advantageous as it provides efficient and accurate finger tracking.

According to a second aspect there is provided a method for correcting a touch input miss on a touch screen of a vehicle, wherein the vehicle comprises a touch screen, a finger tracking sensor device for tracking a finger close to the touch screen, a bump detection system for detecting acceleration of the vehicle, and a processing circuitry operatively connected to the finger tracking sensor device, the touch screen and the bump detection system, the method comprising: detecting and tracking a hand or finger using the finger tracking sensor device; predicting a press location on the touch screen; detecting a touch input on the touch screen; detecting, at the bump detection system, an acceleration above a predetermined threshold; and in response to detecting the touch input and the acceleration within a predetermined time window, comparing the touch input location with the predicted press location and applying the predicted press location instead of the location of the touch input as effective touch input to the touch screen.

According to some embodiments, the method comprises: applying the predicted press location instead of the location of the touch input as effective touch input to the touch screen only if the touch input is determined to be a near miss of a button or affordance on the touch screen.

According to some embodiments, the method comprises: applying the predicted press location instead of the location of the touch input as effective touch input to the touch screen only if the touch input is received after the detected acceleration.

Effects and features of the second aspect are to a large extent analogous to those described above in connection with the first aspect. Embodiments mentioned in relation to the first aspect are largely compatible with the the second aspect.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a schematic drawing of a vehicle according to the present disclosure.

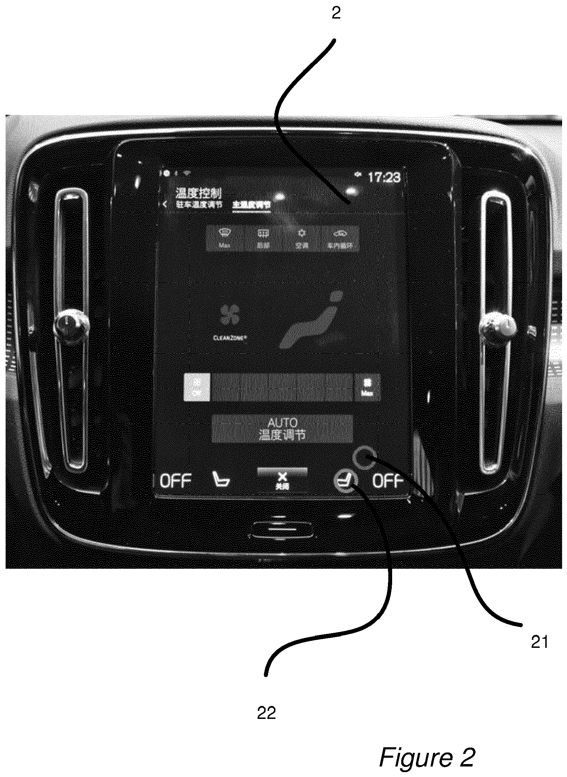

Figure 2 illustrates an example of a near miss press input on a touch display according to an embodiment of the present disclosure.
Figure 3 shows a flow chart illustrating the method according to the second aspect of the present disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

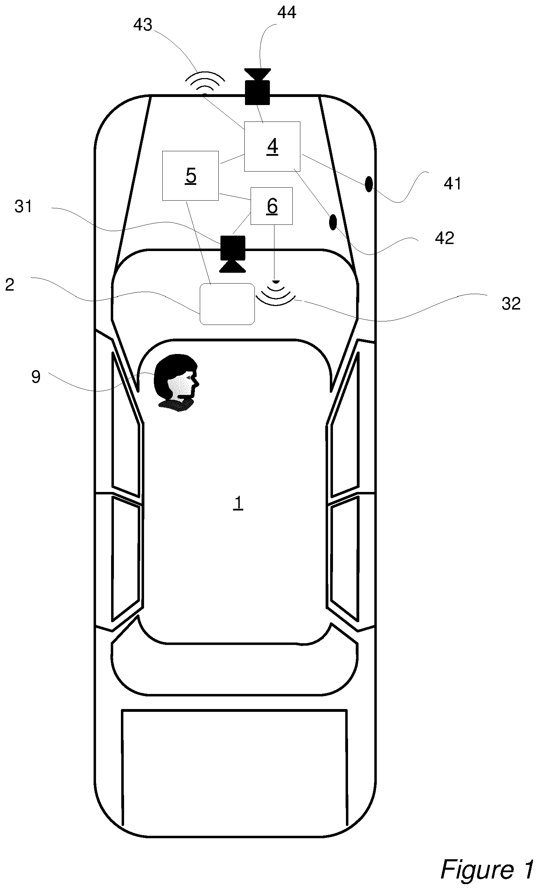

Figure 1 shows the first aspect of this disclosure shows a vehicle 1 comprising: a touch screen 2, a finger tracking sensor device 3 for tracking a finger close to the touch screen, and a bump detection system 4 for detecting acceleration of the vehicle; a processing circuitry 5 operatively connected to the finger tracking sensor device 6, the touch screen and the bump detection system 4, configured to: detect and track a hand or finger using the finger tracking sensor device; predict a press location on the touch screen based on the finger tracking sensor device; detect a touch input on the touch screen; detect, at the bump detection system 4, an acceleration above a predetermined threshold; and in response to detecting the touch input and the acceleration within a predetermined time window, compare the touch input location with the predicted press location and apply the predicted press location instead of the location of the touch input as effective touch input to the touch screen. An advantage with the disclosed embodiment is that the vehicle understands when a user wanted to press a button or affordance on the touch screen but misses it, corrects the input and activates the button or affordance anyway so that the user does not have to repeat the press input process. This leads to fewer inputs needed by the user so that e.g. a driver can concentrate on driving the vehicle. Thus the safety of the vehicle is increased.

The processing circuitry 5 is configured to apply the predicted press location instead of the location of the touch input as effective touch input to the touch screen only if the touch input is determined to be a near miss of a button or affordance on the touch screen, increasing the accuracy of the correction of the press location.

The processing circuitry 5 is configured to apply the predicted press location instead of the location of the touch input as effective touch input to the touch screen only if the touch input is received after the detected acceleration.

The predetermined threshold is different depending if the acceleration is vertical, horizontal in the moving direction of the vehicle or horizontal in the lateral direction of the vehicle, i.e. if the acceleration is vertical, horizontal in the moving direction of the vehicle or horizontal in the lateral direction of the vehicle. In that way normal forward or reverse acceleration of the vehicle may be set to not trigger the correction of the press location for normal driving acceleration in a forward or rear direction while it may me more sensitive to sudden lateral movement and even more sensitive to vertical acceleration.

The bump detection system 4 is a suspension sensor 41 arranged to detect accelerating movement in the vehicle suspension and/or a movement sensor 42 and/or a sensor 43, 44 scanning the road in front of the vehicle to predict bumps in the road. The latter sensor 43, 44 could be e.g. a camera 44 or a LIDAR sensor 43. The vehicle can make use of more than one sensor to increase the accuracy of bump detection.

The predetermined time window response to detecting the touch input and the acceleration is 0 - 1 s. The range can be adjusted for sensitivity of the function.

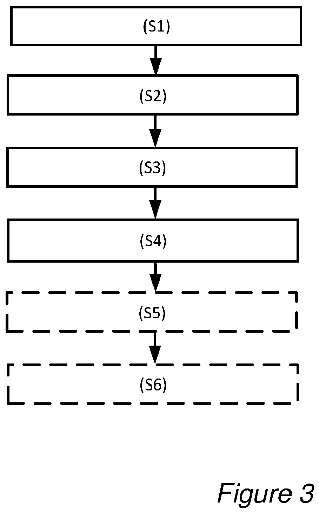

The near miss is a miss of less than 20 mm from an affordance on an area of the display not dedicated to an affordance or button. Figure 3 illustrates an example of a near miss where the press input 21 miss the affordance at position 22. However, the finger tracking sensor device 3 places the press correctly at position 22 and, in accordance with this disclosure, uses the predicted press location of the finger tracking sensor instead of the actual touch input.

The finger tracking sensor device 3 can be a camera 31, a proximity sensor 32 and/or a LIDAR sensor 32. The finger tracking sensor device 3 may have only one sensor or multiple sensors for increased prediction of touch input on the touch screen.

With reference to Figures 3 and Figure 1 the second aspect of this disclosure shows a method for correcting a touch input miss on a touch screen of a vehicle, wherein the vehicle comprises a touch screen 2, a finger tracking sensor device 3 for tracking a finger close to the touch screen, a bump detection system 4 for detecting acceleration of the vehicle, and a processing circuitry 5 operatively connected to the finger tracking sensor device, the touch screen and the bump detection system 4, the method comprising: detecting and tracking S1 a hand or finger using the finger tracking sensor device; predicting S2 a press location on the touch screen; detecting S3 a touch input on the touch screen; detecting S4, at the bump detection system 4, an acceleration above a predetermined threshold; and in response to detecting the touch input and the acceleration within a predetermined time window, comparing S5 the touch input location with the predicted press location and applying S6 the predicted press location instead of the location of the touch input as effective touch input to the touch screen.

The method comprises: applying the predicted press location instead of the location of the touch input as effective touch input to the touch screen only if the touch input is determined to be a near miss of a button or affordance on the touch screen.

The method comprises: applying the predicted press location instead of the location of the touch input as effective touch input to the touch screen only if the touch input is received after the detected acceleration.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A vehicle (1) comprising:
a touch screen (2), a finger tracking sensor device (3) for tracking a finger close to the touch screen, and a bump detection system (4) for detecting acceleration of the vehicle;
a processing circuitry (5) operatively connected to the finger tracking sensor device, the touch screen and the bump detection system (4), configured to:
detect and track a hand or finger using the finger tracking sensor device;
predict a press location on the touch screen based on the finger tracking sensor device;
detect a touch input on the touch screen;
detect, at the bump detection system (4), an acceleration above a predetermined threshold; and
in response to detecting the touch input and the acceleration within a predetermined time window, compare the touch input location with the predicted press location and apply the predicted press location instead of the location of the touch input as effective touch input to the touch screen.

2. The vehicle according to claim 1, wherein the a processing circuitry (5) is configured to apply the predicted press location instead of the location of the touch input as effective touch input to the touch screen only if the touch input is determined to be a near miss of a button or affordance on the touch screen.

3. The vehicle according to claim 1 or 2, wherein the a processing circuitry (5) is configured to apply the predicted press location instead of the location of the touch input as effective touch input to the touch screen only if the touch input is received after the detected acceleration.

4. The vehicle according to any one of the preceding claims, wherein the predetermined threshold is different depending on the direction of the acceleration.

5. The vehicle according to any one of the preceding claims, wherein the bump detection system (4) is a suspension sensor arranged to detect accelerating movement in the vehicle suspension.

6. The vehicle according to any one of claims 1-3, wherein the bump detection system (4) is a movement sensor.

7. The vehicle according to any one of claims 1-3, wherein the bump detection system (4) is a sensor scanning the road in front of the vehicle to predict bumps in the road.

8. The vehicle according to any one of the preceding claims, wherein the predetermined time window is 0 - 1 s.

9. The vehicle according to any one of the preceding claims, wherein the near miss is a miss of less than 20 mm from an affordance on an area of the display not dedicated to an affordance or button.

10. The vehicle according to any one of the preceding claims, wherein the finger tracking sensor device (3) is a camera.

11. The vehicle according to any one of claims 1-10, wherein the finger tracking sensor device (3) is a proximity sensor.

12. The vehicle according to any one of claims 1-10, wherein the finger tracking sensor device (3) is a LIDAR sensor.

13. A method for correcting a touch input miss on a touch screen of a vehicle, wherein the vehicle comprises a touch screen (2), a finger tracking sensor device (3) for tracking a finger close to the touch screen, a bump detection system (4) for detecting acceleration of the vehicle, and a processing circuitry (5) operatively connected to the finger tracking sensor device, the touch screen and the bump detection system (4), the method comprising:
detecting and tracking (S1) a hand or finger using the finger tracking sensor device;
predicting (S2) a press location on the touch screen;
detecting (S3) a touch input on the touch screen;
detecting (S4), at the bump detection system (4), an acceleration above a predetermined threshold; and
in response to detecting the touch input and the acceleration within a predetermined time window, comparing (S5) the touch input location with the predicted press location and applying (S6) the predicted press location instead of the location of the touch input as effective touch input to the touch screen.

14. The method according to claim 13, further comprising: applying the predicted press location instead of the location of the touch input as effective touch input to the touch screen only if the touch input is determined to be a near miss of a button or affordance on the touch screen.

15. The method according to claim 13 or 14, further comprising: applying the predicted press location instead of the location of the touch input as effective touch input to the touch screen only if the touch input is received after the detected acceleration.
